(19) **Europäisches Patentamt / European Patent Office / Office européen des brevets**

(11) **EP 3 132 950 B1**

(12) **EUROPEAN PATENT SPECIFICATION**

(45) Date of publication and mention of the grant of the patent:
**06.03.2019 Bulletin 2019/10**

(51) Int Cl.:
**B60C 17/00** (2006.01)  **B60C 9/08** (2006.01)
**B60C 11/00** (2006.01)  **B60C 3/04** (2006.01)
**B60C 9/14** (2006.01)

(21) Application number: **15780633.2**

(22) Date of filing: **30.01.2015**

(86) International application number:
**PCT/JP2015/000422**

(87) International publication number:
**WO 2015/159468 (22.10.2015 Gazette 2015/42)**

(54) **RUN FLAT TIRE**

NOTLAUFREIFEN

PNEU À ROULAGE À PLAT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2014 JP 2014082820**

(43) Date of publication of application:
**22.02.2017 Bulletin 2017/08**

(73) Proprietor: **Bridgestone Corporation Tokyo 104-8340 (JP)**

(72) Inventor: **MAKINO, Masahiro Kodaira-shi Tokyo 187-8531 (JP)**

(74) Representative: **Oxley, Robin John George Marks & Clerk LLP 90 Long Acre London WC2E 9RA (GB)**

(56) References cited:
**EP-A1- 1 671 814      WO-A2-2008/073885
JP-A- H08 337 101     JP-A- 2012 121 426
JP-A- 2012 121 426    JP-A- 2013 177 115
US-A1- 2008 006 359   US-A1- 2012 103 494**

**Description**

TECHNICAL FIELD

This disclosure relates to a run flat tire that, in the side portion thereof, has side reinforcing rubber with a crescent cross-sectional shape in the tire width direction.

BACKGROUND

In a run flat tire that, in the side portion thereof, has side reinforcing rubber with a crescent cross-sectional shape in the tire width direction, i.e. in a side-reinforced type run flat tire, it is known that the vertical spring constant of the tire increases as a result of providing the side reinforcing rubber in the tire side portion, thereby reducing the ride comfort. US 2008/006359 A1, on which the preamble of claim 1 is based, discloses a tire having a carcass extending between bead portions and a sidewall reinforcing rubber layer disposed inside the carcass in the sidewall portion of the tire.

JP 2007-069775 A (PTL 1) discloses that the rubber volume of the side reinforcing rubber can be reduced by using an extremely round outline shape for the tread, thereby keeping the increase in tire mass and the reduction in ride comfort low while guaranteeing the run flat capability.

CITATION LIST

Patent Literature

PTL 1: JP 2007-069775 A

SUMMARY

(Technical Problem)

However, in the tire disclosed in PTL 1, the tread has an extremely round outline shape, which reduces the volume of the side reinforcing rubber that can be disposed in the tire side portion. As a result, distortion of the side reinforcing rubber layer increases during run flat running, which may worsen the run flat durability.

Furthermore, another main technical problem with run flat tires has been making ride comfort compatible with run flat durability. At the same time, in the major European market, fuel efficiency restrictions are going into effect, thus increasing the demand for a reduction in rolling resistance in run flat tires.

One of the ways of reducing rolling resistance in a regular tire is to reduce the ratio TW/SW, where TW is the half width in the tire width direction between the pair of tread edges, and SW is half of the tire maximum width. By reducing TW to reduce the amount of rubber in the crown portion, the weight and rolling resistance can be lowered. From this perspective, the relationship TW/SW $\leq$ 0.88 for an aspect ratio of 45 or less and the relationship TW/SW $\leq$ 0.83 for an aspect ratio of 50 or higher has conventionally been considered preferable. Hence, as the aspect ratio is higher, a lower ratio TW/SW has been considered preferable.

In a run flat tire, however, reducing the ratio TW/SW increases the deformation of the shoulder portion of the tire when the tire is punctured, thereby worsening the run tire durability. Unfortunately, if the gauge of the run flat reinforcement rubber is thickened to compensate, the rolling resistance worsens.

Therefore, it would be helpful to provide a run flat tire in which the ride comfort during regular running, the durability during run flat running, and a reduction in rolling resistance are all compatible.

(Solution to Problem)

A summary of this disclosure is as follows.

My run flat tire comprises:

a carcass toroidally extending between a pair of bead portions; and
side reinforcing rubber on an inside of the carcass in a tire width direction, the side reinforcing rubber having a crescent cross-sectional shape in the tire width direction; wherein

$$0.09 \leq \text{TWH/TW} \leq 0.19,$$

$$D/SH \leq 0.05,$$

and

$$0.89 \leq TW/SW \leq 0.94,$$

where, in a reference state such that the run flat tire is mounted on an applicable rim and inflated to a prescribed internal pressure with no load applied, TW (mm) represents a half width in the tire width direction between a pair of tread edges, TWH (mm) represents a drop height of the tread edge in a tire radial direction, SW (mm) represents half of a tire maximum width, SH (mm) represents a cross-sectional height of the tire, and D (mm) represents a drop height of the tire at a position 0.6SW (mm) outward, in the tire width direction, from a tire equatorial plane.

As used herein, an "applicable rim" refers to a rim specified by the standards below in accordance with tire size, "prescribed internal pressure" refers to air pressure specified by the standards below in accordance with the maximum load capability, and the "maximum load capability" refers to the maximum mass that the tire is allowed to bear according to the standards below. The standards are determined by valid industrial standards for the region in which the tire is produced or used, such as the "Year Book" of "THE TIRE AND RIM ASSOCIATION, INC. (TRA)" in the United States of America, the "STANDARDS MANUAL" of "The European Tyre and Rim Technical Organisation (ETRTO)" in Europe, and the "JATMA YEAR BOOK" of the "Japan Automobile Tyre Manufacturers Association" in Japan.

The "drop height" refers to the tire radial distance, in the aforementioned reference state, between the tread surface at a predetermined position in the tire width direction and the tread surface position at the tire equatorial plane. Furthermore, the "tread edges" refer to the edges, in the tire width direction, of the entire outer circumferential surface of the tire (tread surface) that comes into contact with the road surface when the run flat tire is attached to an applicable rim, filled to a prescribed internal pressure, and rolled while being placed under a load corresponding to the maximum load capability. The "cross-sectional height of the tire" refers to the tire radial distance from the bead base to the outermost position in the tire radial direction in a cross-section of the tire in the tire width direction.

(Advantageous Effect)

According to this disclosure, a run flat tire in which the ride comfort during regular running, the durability during run flat running, and a reduction in rolling resistance are all compatible can be provided.

BRIEF DESCRIPTION OF THE DRAWINGS

In the accompanying drawings:

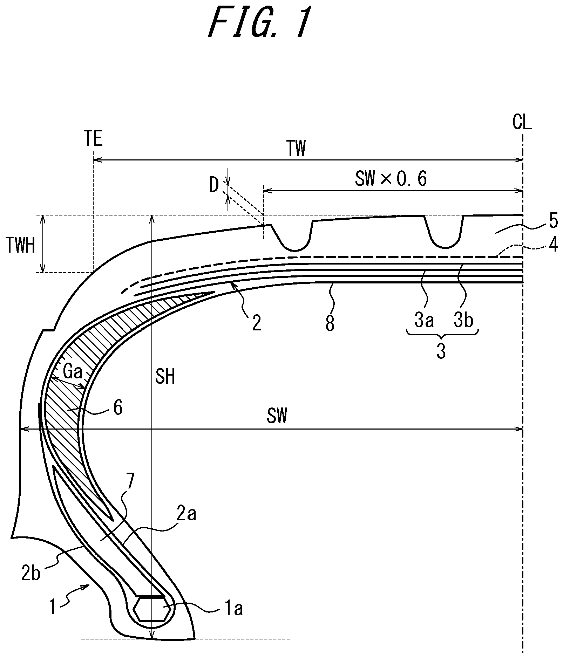

FIG. 1 is a cross-sectional diagram in the tire width direction of a run flat tire according to one of the disclosed embodiments.

DETAILED DESCRIPTION

The following describes embodiments of this disclosure in detail with reference to the drawing.

FIG. 1 is a cross-sectional diagram in the tire width direction of a run flat tire according to one of the disclosed embodiments. FIG. 1 only illustrates one half portion that is bordered by the tire equatorial plane CL. The other half portion has the same structure as the illustrated half portion and is therefore omitted. FIG. 1 illustrates the run flat tire in a standard state in which the run flat tire is mounted on an applicable rim and inflated to a prescribed internal pressure with no load applied.

As illustrated in FIG. 1, the run flat tire of this embodiment (hereinafter also simply referred to as a tire) is provided with a carcass 2 constituted by a carcass body portion 2a, toroidally extending between bead portions 1 in which a pair (only one of which is illustrated) of bead cores 1a are embedded, and a carcass folded-up portion 2b that continues from the carcass body portion 2a and turns up around the bead cores 1a. In the illustrated example, the end of the carcass folded-up portion 2b is positioned on the outer side in the tire radial direction with respect to the tire maximum width portion, but the end of the carcass folded-up portion 2b may, for example, extend to a point on the inner side in the tire width direction with respect to the tire width direction end of the belt layers 3a, 3b. The carcass 2 may, for example, be configured by at least one carcass ply constituted by organic fiber cords, steel cords, or the like.

In the illustrated example, the tire includes a belt 3, one belt reinforcement layer 4, and a tread 5 in this order on the outer side of the carcass 2 in the tire radial direction. The belt 3 is formed by two belt layers 3a and 3b. The two belt layers 3a and 3b in the illustrated example are formed by belt cords, such as organic fiber cords or steel cords, that extend at an inclination with respect to the tire circumferential direction. The belt cords of the two belt layers 3a and 3b extend in directions that intersect each other. In the illustrated example, the belt reinforcement layer 4 is formed by organic fiber cords or steel cords that extend substantially in the tire circumferential direction. The number of layers, the material, the location, and other aspects of the configuration of the belt 3 and the belt reinforcement layer 4 may be modified as necessary. For example, the belt reinforcement layer 4 may have two layers only at the outer side edges, in the tire width direction, of the belt layers 3a and 3b.

As illustrated in FIG. 1, this tire also includes, in the side portion thereof, side reinforcing rubber 6 on the inside of the carcass 2 in the tire width direction. The side reinforcing rubber 6 has a crescent cross-sectional shape in the tire width direction. In other words, in a tire width direction cross-section, the thickness of the side reinforcing rubber 6 gradually decreases in the tire width direction from near the central position of the side reinforcing rubber 6 in the tire radial direction towards the inside and the outside in the tire radial direction, and the side reinforcing rubber 6 has a shape projecting outward in the tire width direction. As illustrated in FIG. 1, the side reinforcing rubber 6 has a maximum thickness Ga near the central position in the tire radial direction. In a cross-section in the tire width direction, the maximum thickness Ga of the side reinforcing rubber 6 is the maximum distance between a point on the curved inner surface of the side reinforcing rubber 6 in the tire width direction and a point where a normal line from the point on the inner surface intersects the outer surface of the side reinforcing rubber 6 in the tire width direction. By providing such side reinforcing rubber 6, even when the internal pressure of the tire is reduced due to a puncture or the like, the side reinforcing rubber 6 contributes to supporting the vehicle body weight, allowing the vehicle to be driven safely for a certain distance.

As illustrated in FIG. 1, a bead filler 7 is disposed on the outside, in the tire radial direction, of the bead core 1a. In this example, the bead filler 7 has a tapered shape in which the width, in the tire width direction, of the tip on the outside in the tire radial direction narrows. As illustrated in FIG. 1, an inner liner 8 that is highly impermeable to air is disposed on the inner surface of the tire.

In the aforementioned reference state, TW (mm) represents the half width in the tire width direction between the pair of tread edges TE, TWH (mm) represents the drop height of the tread edge TE in the tire radial direction, SW (mm) represents half of the tire maximum width, SH (mm) represents the cross-sectional height of the tire, and D (mm) represents the drop height of the tire at a position 0.6SW (mm) outward, in the tire width direction, from the tire equatorial plane CL.

At this time, in the run flat tire of this embodiment, the following relational expressions (1) to (3) are satisfied simultaneously.

$$(1)\ 0.09 \leq \mathrm{TWH/TW} \leq 0.19$$

$$(2)\ \mathrm{D/SH} \leq 0.05$$

$$(3)\ 0.89 \leq \mathrm{TW/SW} \leq 0.94$$

The following describes the effects of the run flat tire according to this embodiment.

First, relational expression (1) is explained.

In this embodiment, the ratio TWH/TW is set to 0.09 or higher, thereby expanding the area in which the tread 5 can deform. Accordingly, from a low load to a regular load (approximately 70% of the maximum load capability), the load due to load fluctuation can be received by the change in the tread 5, deformation of the tire side portion can be suppressed, and the vertical spring constant of the tire can be reduced. The ride comfort can thus be improved during regular running. If the ratio TWH/TW exceeds 0.19, however, deformation during run flat running cannot be suppressed, and the durability during run flat running ends up degrading. As described above, by satisfying relational expression (1), the ride comfort during regular running can be made compatible with durability during run flat running.

Next, relational expression (2) is explained.

In this embodiment, since the ratio D/SH is 0.05 or lower, a large footprint area can be guaranteed in the central region, in the tire width direction, of the tread 5. Accordingly, distortion of the side reinforcing rubber 6 during run flat running can be kept small, and durability during run flat running can be improved. In this way, by satisfying relational expression (2), durability during run flat running can be improved.

On the other hand, in order to suppress deformation of the shoulder portion during a regular load (approximately 70% to 80% of the maximum load) and to suppress a worsening of rolling resistance, the relational expression of ratio D/SH ≥ 0.02 is preferably satisfied.

Next, relational expression (3) is explained.

In this embodiment, since the ratio TW/SW is set to 0.94 or lower, the amount of tread rubber can be reduced, thus reducing the rolling resistance. On the other hand, since the ratio TW/SW is set to 0.89 or higher in this embodiment, distortion of the tread rubber can be reduced, which reduces the rolling resistance. In this way, by satisfying relational expression (3), the rolling resistance can be reduced.

As described above, by simultaneously satisfying relational expressions (1) to (3), the ride comfort during regular running, the durability during run flat running, and a reduction in rolling resistance can all be made compatible.

In the run flat tire of this disclosure, relational expression (4) below is preferably satisfied.

$$(4)\ 0.89 \leq TW/SW \leq 0.92$$

This range is preferable because, for reasons similar to those described above, setting the ratio TW/SW to be 0.92 or lower can further reduce the amount of tread rubber, which further reduces the rolling resistance. On the other hand, setting the ratio TW/SW to be 0.89 or higher further reduces the distortion in the tread rubber, thus further reducing the rolling resistance.

Furthermore, in the run flat tire of this disclosure, relational expression (5) below is preferably satisfied.

$$(5)\ 0.12 \leq TWH/TW \leq 0.19$$

This range is preferable because, for reasons similar to those described above, the ride comfort during regular running can be further improved by setting the ratio TWH/TW to be 0.12 or higher.

In this disclosure, the radius of curvature R of the tire outer surface at the tread edge TE is 35 mm or less and more preferably 25 mm or less.

The reason is that collapsing of the side portion during run flat running can be suppressed, and the durability during run flat running can be improved.

Furthermore, in this disclosure, the maximum thickness Ga of the side reinforcing rubber 6 is preferably from 6 mm to 8 mm when SH ≤ 110 mm. The reason is that the run flat durability can be guaranteed by setting the maximum thickness Ga to be 6 mm or higher, whereas worsening of the rolling resistance can be suppressed with a setting of 8 mm or lower. The maximum thickness Ga of the side reinforcing rubber 6 is preferably from 8 mm to 10 mm when 110 mm ≤ SH ≤ 130 mm. The reason is that the run flat durability can be guaranteed by setting the maximum thickness Ga to be 8 mm or higher, whereas worsening of the rolling resistance can be suppressed with a setting of 10 mm or lower.

EXAMPLES

In order to confirm the effects of my tire, test tires for Examples 1-20 and Comparative Examples 1-11 were prepared, and the following tests were performed to evaluate tire performance.

<Vertical Spring Constant>

After being mounted on an approved rim prescribed by JATMA, each tire was inflated to a tire internal pressure of 230 kPa, a load that was 70% of a load corresponding to the maximum load capability was applied in the tire radial direction, and deflection of the tire in the tire radial direction was measured. As the numerical value for the indices in Tables 1 to 6 is smaller, the ride comfort is better.

<Run Flat Durability>

For each tire, the running distance was measured in a run flat durability drum according to ISO conditions. As the numerical value for the indices in Tables 1 to 6 is larger, the run flat durability is better.

<Rolling Resistance>

For each tire, the rolling resistance according to ISO conditions was measured. As the numerical value for the indices in Tables 1 to 6 is smaller, the rolling resistance is further reduced.

In Tables 1 to 6, the radius of curvature R (mm) refers to the radius of curvature of the tire outer surface at the tread edge TE.

First, various aspects of tire performance were evaluated while changing the ratio TWH/TW for the tires according to Examples 1 to 4 and Comparative Examples 1 and 2, which had a tire size of 225/45R17. The specifications of each tire and the evaluation results are shown in Table 1. Similarly, various aspects of tire performance were evaluated while changing the ratio TWH/TW for the tires according to Examples 5 to 8 and Comparative Examples 3 and 4, which had a tire size of 255/35R19. The specifications of each tire and the evaluation results are shown in Table 2. Table 1 lists relative values with the evaluation results for Comparative Example 1 each being 100, and Table 2 lists relative values with the evaluation results for Comparative Example 3 each being 100.

[Table 1]

| | Comparative Example 1 | Example 1 | Example 2 | Example 3 | Example 4 | Comparative Example 2 |
|---|---|---|---|---|---|---|
| TW/SW | 0.9 | 0.9 | 0.9 | 0.9 | 0.9 | 0.9 |
| TWH/TW | 0.07 | 0.09 | 0.12 | 0.15 | 0.19 | 0.21 |
| D/SH | 0.03 | 0.03 | 0.03 | 0.03 | 0.03 | 0.03 |
| Radius of curvature R (mm) | 25 | 25 | 25 | 25 | 25 | 25 |
| Ga (mm) | 7.0 | 7.0 | 7.4 | 7.7 | 8.1 | 8.3 |
| Vertical spring constant | 100 | 98 | 96 | 93 | 89 | 87 |
| Run flat durability | 100 | 100 | 100 | 100 | 100 | 100 |
| Rolling resistance coefficient | 100 | 99 | 98 | 98 | 100 | 102 |

[Table 2]

| | Comparative Example 3 | Example 5 | Example 6 | Example 7 | Example 8 | Comparative Example 4 |
|---|---|---|---|---|---|---|
| TW/SW | 0.9 | 0.9 | 0.9 | 0.9 | 0.9 | 0.9 |
| TWH/TW | 0.07 | 0.09 | 0.12 | 0.15 | 0.19 | 0.21 |
| D/SH | 0.03 | 0.03 | 0.03 | 0.03 | 0.03 | 0.03 |
| Radius of curvature R (mm) | 25 | 25 | 25 | 25 | 25 | 25 |
| Ga (mm) | 6.5 | 6.7 | 7.0 | 7.4 | 7.8 | 8.0 |
| Vertical spring constant | 100 | 98 | 95 | 92 | 88 | 86 |
| Run flat durability | 100 | 100 | 100 | 100 | 100 | 100 |
| Rolling resistance coefficient | 100 | 99 | 98 | 99 | 100 | 103 |

Tables 1 and 2 show that in the range of $0.09 \leq TWH/TW \leq 0.19$, ride comfort during regular running and durability during run flat running are made compatible. In particular, in the case of the ratio TWH/TW being 0.12 or higher, the ride comfort during regular running is clearly excellent.

Next, various aspects of tire performance were evaluated while changing the ratio D/SH for the tires according to Examples 9 and 10 and Comparative Example 5, which had a tire size of 225/45R17. The specifications of each tire and the evaluation results are shown in Table 3. Similarly, various aspects of tire performance were evaluated while changing the ratio D/SH for the tires according to Examples 11 and 12 and Comparative Example 6, which had a tire size of 255/35R19. The specifications of each tire and the evaluation results are shown in Table 4. Table 3 lists relative values with the evaluation results for Comparative Example 5 each being 100, and Table 4 lists relative values with the evaluation results for Comparative Example 6 each being 100.

[Table 3]

|  | Example 9 | Example 10 | Comparative Example 6 |
|---|---|---|---|
| TW/SW | 0.9 | 0.9 | 0.9 |
| TWH/TW | 0.15 | 0.15 | 0.15 |
| D/SH | 0.03 | 0.05 | 0.06 |
| Radius of curvature R (mm) | 25 | 25 | 25 |
| Ga (mm) | 7.0 | 7.0 | 7.0 |
| Vertical spring constant | 101 | 100 | 100 |
| Run flat durability | 105 | 102 | 100 |
| Rolling resistance coefficient | 100 | 99 | 100 |

[Table 4]

|  | Example 11 | Example 12 | Comparative Example 7 |
|---|---|---|---|
| TW/SW | 0.9 | 0.9 | 0.9 |
| TWH/TW | 0.15 | 0.15 | 0.15 |
| D/SH | 0.03 | 0.05 | 0.06 |
| Radius of curvature R (mm) | 25 | 25 | 25 |
| Ga (mm) | 6.5 | 6.5 | 6.5 |
| Vertical spring constant | 101 | 100 | 100 |
| Run flat durability | 107 | 103 | 100 |
| Rolling resistance coefficient | 100 | 100 | 100 |

Tables 3 and 4 show that when the ratio D/SH $\leq$ 0.05 is satisfied, durability during run flat running is improved.

Next, various aspects of tire performance were evaluated while changing the ratio TW/SW for the tires according to Examples 13 to 16 and Comparative Examples 8 and 9, which had a tire size of 225/45R17. The specifications of each tire and the evaluation results are shown in Table 5. Similarly, various aspects of tire performance were evaluated while changing the ratio TW/SW for the tires according to Examples 17 to 20 and Comparative Examples 10 and 11, which had a tire size of 255/35R19. The specifications of each tire and the evaluation results are shown in Table 6. Table 5 lists relative values with the evaluation results for Comparative Example 8 each being 100, and Table 6 lists relative values with the evaluation results for Comparative Example 10 each being 100.

[Table 5]

|  | Comparative Example 8 | Example 13 | Example 14 | Example 15 | Example 16 | Comparative Example 9 |
|---|---|---|---|---|---|---|
| TW/SW | 0.84 | 0.89 | 0.9 | 0.92 | 0.94 | 0.96 |
| TWH/TW | 0.15 | 0.15 | 0.15 | 0.15 | 0.15 | 0.15 |
| D/SH | 0.03 | 0.03 | 0.03 | 0.03 | 0.03 | 0.03 |
| Radius of curvature R (mm) | 25 | 25 | 25 | 25 | 25 | 25 |
| Ga (mm) | 7.5 | 6.9 | 6.8 | 6.6 | 6.4 | 6.1 |
| Vertical spring constant | 100 | 100 | 100 | 99 | 99 | 99 |

(continued)

|  | Comparative Example 8 | Example 13 | Example 14 | Example 15 | Example 16 | Comparative Example 9 |
|---|---|---|---|---|---|---|
| Run flat durability | 100 | 100 | 100 | 100 | 100 | 100 |
| Rolling resistance coefficient | 100 | 98 | 97 | 98 | 99 | 102 |

[Table 6]

|  | Comparative Example 10 | Example 17 | Example 18 | Example 19 | Example 20 | Comparative Example 11 |
|---|---|---|---|---|---|---|
| TW/SW | 0.84 | 0.89 | 0.9 | 0.92 | 0.94 | 0.96 |
| TWH/TW | 0.15 | 0.15 | 0.15 | 0.15 | 0.15 | 0.15 |
| D/SH | 0.03 | 0.03 | 0.03 | 0.03 | 0.03 | 0.03 |
| Radius of curvature R (mm) | 25 | 25 | 25 | 25 | 25 | 25 |
| Ga (mm) | 7.0 | 6.4 | 6.3 | 6.0 | 5.8 | 5.5 |
| Vertical spring constant | 100 | 100 | 100 | 100 | 100 | 100 |
| Run flat durability | 100 | 100 | 100 | 100 | 100 | 100 |
| Rolling resistance coefficient | 100 | 98 | 97 | 98 | 99 | 102 |

Tables 5 and 6 show that the rolling resistance is good in a range satisfying the relationship $0.89 \leq TW/SW \leq 0.94$. In particular, the rolling resistance is even better in the range $0.89 \leq TW/SW \leq 0.92$.

As described above, by simultaneously satisfying relational expressions (1) to (3), the ride comfort during regular running, the durability during run flat running, and a reduction in rolling resistance can all be made compatible.

Furthermore, by satisfying relational expression (4), the ride comfort during regular running in particular is good, and by satisfying relational expression (5), the rolling resistance in particular can be reduced.

REFERENCE SIGNS LIST

| 1 | Bead portion |
| 1a | Bead core |
| 2 | Carcass |
| 2a | Carcass body portion |
| 2b | Carcass folded-up portion |
| 3a, 3b | Belt layer |
| 3 | Belt |
| 4 | Belt reinforcement layer |
| 5 | Tread |
| 6 | Side reinforcing rubber |
| 7 | Bead filler |
| 8 | Inner liner |
| CL | Tire equatorial plane |
| TE | Tread edge |

**Claims**

**1.** A run flat tire comprising:

a carcass (2) toroidally extending between a pair of bead portions (1); and
a side reinforcing rubber (6) on an inside of the carcass (2) in a tire width direction, the side reinforcing rubber (6) having a crescent cross-sectional shape in the tire width direction; **characterised in that**

$$0.09 \leq \text{TWH/TW} \leq 0.19,$$

$$\text{D/SH} \leq 0.05,$$

and

$$0.89 \leq \text{TW/SW} \leq 0.94,$$

where, in a reference state such that the run flat tire is mounted on an applicable rim and inflated to a prescribed internal pressure with no load applied, TW (mm) represents a half width in the tire width direction between a pair of tread edges, TWH (mm) represents a drop height of a tread edge (TE) in a tire radial direction, SW (mm) represents half of a tire maximum width, SH (mm) represents a cross-sectional height of the tire, and D (mm) represents a drop height of the tire at a position 0.6SW (mm) outward, in the tire width direction, from a tire equatorial plane (CL), and

wherein a radius of curvature (R) of a tire outer surface at the tread edge (TE) is 35 mm or less, and
the applicable rim and prescribed internal pressure being specified by valid industrial standards for the region in which the tire is to be produced or used, including the "Year Book" of "THE TIRE AND RIM ASSOCIATION, INC. (TRA)" in the United States of America, the "STANDARDS MANUAL" of "The European Tyre and Rim Technical Organisation (ETRTO)" in Europe, and the "JATMA YEAR BOOK" of the "Japan Automobile Tyre Manufacturers Association" in Japan.

**2.** The run flat tire of claim 1, wherein $0.89 \leq \text{TW/SW} \leq 0.92$.

**3.** The run flat tire of claim 1 or claim 2, wherein $0.12 \leq \text{TWH/TW} \leq 0.19$.

**Patentansprüche**

**1.** Notlaufreifen, der Folgendes umfasst:

eine Karkasse (2), die sich kreisringförmig zwischen einem Paar von Wulstabschnitten (1) erstreckt, und
einen Seitenverstärkungsgummi (6) auf einer Innenseite der Karkasse (2) in einer Reifenbreitenrichtung, wobei der Seitenverstärkungsgummi (6) eine Halbmond-Querschnittsform in der Reifenbreitenrichtung aufweist, **dadurch gekennzeichnet, dass**

$$0,09 \leq \text{TWH/TW} \leq 0,19,$$

$$\text{D/SH} \leq 0,05$$

und

$$0,89 \leq \text{TW/SW} \leq 0,94,$$

wobei, in einem Referenzzustand derart, dass der Notlaufreifen auf einer anwendbaren Felge montiert und zu einem vorgeschriebenen Innendruck aufgeblasen ist, wobei keine Last ausgeübt wird, TW (mm) eine halbe Breite in der Reifenbreitenrichtung zwischen einem Paar von Laufflächenkanten darstellt, TWH (mm) eine Fallhöhe einer Laufflächenkante (TE) in einer Reifenradialrichtung darstellt, SW (mm) die Hälfte einer Reifenmaximalbreite darstellt, SH (mm) eine Querschnittshöhe des Reifens darstellt und D (mm) eine Fallhöhe des Reifens an einer Position, 0,65 SW (mm) nach außen, in der Reifenbreitenrichtung, von einer Reifenäquatorialebene (CL), darstellt und

wobei ein Krümmungsradius (R) einer Reifenaußenfläche an der Laufflächenkante (TE) 35 mm oder weniger beträgt und

die anwendbare Felge und der vorgeschriebene Innendruck durch gültige Industriestandards für das Gebiet, in dem der Reifen gefertigt oder verwendet werden soll, spezifiziert werden, einschließlich des "Year Book" der "THE TIRE AND RIM ASSOCIATION INC. (TRA)" in den Vereinigten Staaten von Amerika, des "STANDARDS MANUAL" der "The European Tyre and Rim Technical Organisation (ETRTO)" in Europa und des "JATMA YEAR BOOK" der "Japan Automobile Tyre Manufacturers Association" in Japan.

2. Notlaufreifen nach Anspruch 1, wobei $0,89 \leq TW/SW \leq 0,92$.

3. Notlaufreifen nach Anspruch 1 oder Anspruch 2, wobei $0,12 \leq TWH/TW \leq 0,19$.

## Revendications

1. Bandage pneumatique à roulage à plat, comprenant :

une carcasse (2) s'étendant toroïdalement entre une paire de parties de talon (1) ; et
une gomme de renforcement latérale (6) sur un intérieur de la carcasse (2), dans une direction de la largeur du bandage pneumatique, la gomme de renforcement latérale (6) ayant une forme en croissant en section transversale, dans la direction de la largeur du bandage pneumatique ; **caractérisé en ce que** :

$$0,09 \leq TWH/TW \leq 0,19,$$

$$D/SH \leq 0,05,$$

et

$$0,89 \leq TW/SW \leq 0,94 ;$$

dans lequel, dans un état de référence dans lequel le bandage pneumatique à roulage à plat est monté sur une jante applicable et gonflé à une pression interne prescrite, sans application de charge, TW (mm) représente une demi-largeur dans la direction de la largeur du bandage pneumatique, entre une paire de bords de la bande de roulement, TWH représentant une hauteur de chute d'un bord de la bande de roulement (TE), dans une direction radiale du bandage pneumatique, SW (mm) représentant la moitié d'une largeur maximale du bandage pneumatique, SH (mm) représentant une hauteur de section transversale du bandage pneumatique, et D (mm) représentant une hauteur de chute du bandage pneumatique au niveau d'une position située de 0,6 SW vers l'extérieur, dans la direction de la largeur du bandage pneumatique, à partir d'un plan équatorial du bandage pneumatique (CL) ; et
dans lequel un rayon de courbure (R) d'une surface externe du bandage pneumatique, au niveau du bord de la bande de roulement (TE), correspond à 35 mm ou moins ; et
la jante applicable et la pression interne prescrite étant spécifiées par des normes industrielles en vigueur pour la région dans laquelle le bandage pneumatique doit être produit ou utilisé, incluant le « Year Book » de la « THE TIRE AND RIM ASSOCIATION, INC. (TRA) » aux Etats-Unis d'Amérique, le « STANDARD MANUAL » de la « The European Tyre And Rim Technical Organisation (ETRTO) » en Europe, et le « JATMA YEAR BOOK » de la « Japan Automobile Tyre Manufacturers Association » au Japon.

2. Bandage pneumatique à roulage à plat selon la revendication 1, dans lequel $0,89 \leq TW/SW \leq 0,92$.

3. Bandage pneumatique à roulage à plat selon les revendications 1 ou 2, dans lequel $0,12 \leq TWH/TW \leq 0,19$.

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008006359 A1

- JP 2007069775 A